Europäisches Patentamt

European Patent Office

Office européen des brevets

(19)

(11) Publication number: **0 018 804**
**B1**

(12) **EUROPEAN PATENT SPECIFICATION**

(45) Date of publication of patent specification: **01.02.84**    (51) Int. Cl.³: **F 16 K 21/04, E 03 B 9/20**

(21) Application number: **80301374.7**

(22) Date of filing: **25.04.80**

(54) Valve.

(30) Priority: **27.04.79 GB 7914813**

(43) Date of publication of application:
**12.11.80 Bulletin 80/23**

(45) Publication of the grant of the patent:
**01.02.84 Bulletin 84/5**

(84) Designated Contracting States:
**AT BE CH DE FR IT LI LU NL SE**

(56) References cited:
**CH - A - 480 575**
**DE - A - 2 419 613**
**FR - A - 2 131 410**
**US - A - 1 875 283**
**US - A - 3 148 700**

(73) Proprietor: **H.E. RUDGE & COMPANY LIMITED**
**Leopold Street**
**Birmingham B12 OUR (GB)**

(73) Proprietor: **ASSOCIATED BUILDERS MERCHANTS LIMITED**
**182, Cranbrook Road**
**Ilford Essex IG1 4LT (GB)**

(72) Inventor: **Adams, John Frank**
**143, Apsley Road Oldbury**
**Warley West Midlands (GB)**

(74) Representative: **Smith, Geoffrey Leonard et al,**
**STANLEY, POPPLEWELL, POOLE 57 Lincoln's Inn Fields**
**London WC2A 3LS (GB)**

## Valve.

This invention relates to valves and more particularly to valves for use in connecting appliances to water mains and controlling the flow of water to such appliances. A particular appliance for which the valve is designed is a drinking fountain, but it will be appreciated that the invention is not so limited and may be used with other appliances.

One form of valve which is much used includes a plunger extending through a valve seat and carrying a tapered valve closure member of elastic material engageable with a correspondingly tapered surface on the seat, with the base of the tapered member being on the upstream side of the seat. In such an arrangement, the plunger may be spring loaded to a closed position and opened by depression of the plunger against the action of the spring. The action is easy, and the seating are kept clean by the flow of water over them and the possibility of solid matter, such as particles of scale, collecting on the seating surfaces is minimal.

A drawback of such an arrangement is that when the elastic material wears, as normally happens from time to time, replacement is difficult, in that the valve has to be removed to obtain access to the end of the plunger on the upstream side of the valve seat.

It has previously been proposed in FR—A—2131410 to provide a dashpot valve in which a valve seat and valve closure member were mounted in a cartridge threadedly and sealingly received in a valve body. In that construction, provision was made for adjustment of the flow through the valve, when opened, by choice of the position of the cartridge in relation to the valve body to provide greater or lesser restriction of the flow to the valve seat itself. This mechanism was designed particularly for drinking fountains, and the comparatively coarse nature of the adjustment provided by movement of the whole plunger would not be suitable for the fairly low rates required of such installations.

Accordingly, the present invention provides a valve comprising a valve body having an inlet connection and an outlet leading to and from a valve chamber in the body respectively, a valve seat in the valve chamber and facing towards the inlet, a plunger carrying a valve closure member of resilient material cooperable with the valve seat, and restrictor means for flow adjustment, the valve seat being carried by a valve seat support removably and sealingly received and secured in the valve chamber, the said plunger being slidably and sealingly mounted in the valve seat support, characterised in that the valve seat support is slid into the valve chamber and secured in a predetermined position therein, and in that a restrictor member is adjustably mounted inside the plunger so as to define therewith a restricted flow passage forming part of the flow path between the valve seat and the outlet.

It will be seen that the present invention provides for the valve seat support to be slid into position in the valve body and secured in a fixed position, e.g. by a lock nut. Adjustment of the flow is provided by a separate variable restrictor fitted in the plunger and thus located between the valve seat and the outlet.

Such an arrangement is particularly suitable for low flow rates such as are met within drinking fountains.

The plunger may extend beyond the valve seat support and be spring loaded outwardly thereof towards an external operating device, such as a toggle or press button. The toggle may be located by a top cover removable to obtain access to the lock ring.

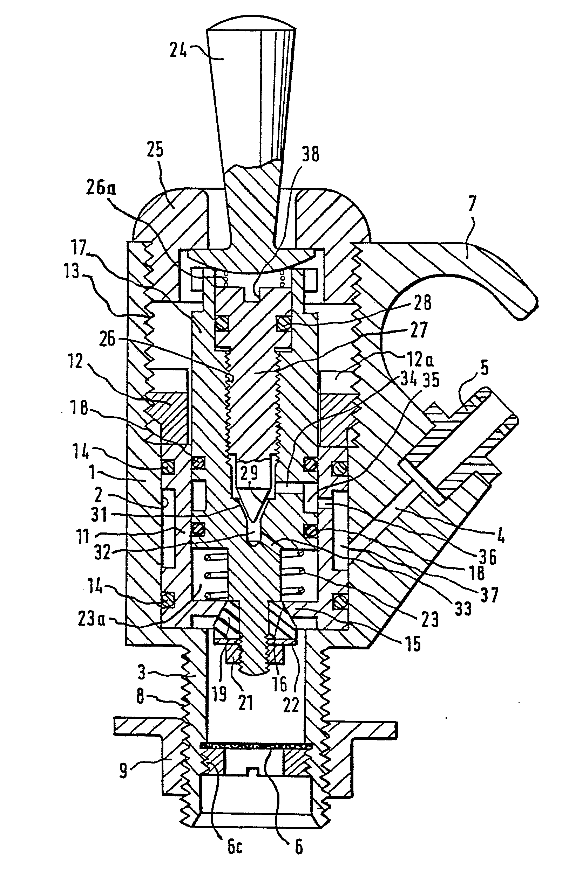

The invention will be further described with reference to the accompanying single Figure of drawing which is a diagrammatic sectional view taken axially through a valve constituting a preferred form of the invention.

The valve illustrated in the drawing includes a valve body 1 having therein a chamber 2 having an inlet duct 3 and an outlet duct 4 leading to a drinking fountain nozzle 5. The nozzle 5 may be threadedly received within the valve body or brazed in position. An inlet filter is shown at 6 held in place by a clamping ring 6c. The body 1 is also shown as having an overhang 7 adjacent the nozzle 5. The inlet duct 3 is threaded, as shown at 8, on its external surface and is provided with a lock nut 9 for securing to external piping, and particularly a mains water pipe.

Within a cylindrical portion of the chamber 2 there is slidably and sealingly received a carrier 11 which is held in position by means of a lock ring 12 having slots 12a and cooperating with a threaded portion 13 of the chamber adjacent the cylindrical portion. The carrier 11 is sealed against the chamber by means of O-rings 14, e.g. of a nitrile or other non-toxic material. The carrier 11 supports an inwardly directed flange 15 having a tapered valve seat 16 formed thereon and facing down the inlet duct 3.

A plunger 17 is slidably received within the carrier 11, being provided with sealing O-rings 18, also e.g. of nitrile or other non-toxic material, and carries at its inner end a rubber or other flexible elastomer material tapered valve member 19 cooperable with the valve seat 16. The member 19 is held in place by means of a nut 21 and washer 22. The plunger 17 is urged towards a closed position of a valve by means of a spring 23.

At its outer end, the plunger 17 projects beyond the carrier 11 and is arranged to be depressed against the influence of the spring 23 by means of a toggle 24 or other operating member (such as a push button) supported in the valve body 1. As illustrated, the toggle 24 is supported by a top cover 25 threadedly received on the thread 13. A light spring 26a is provided between the toggle 24 and the plunger to give a more positive feel to the operation.

The plunger is provided with an internal thread 26 which receives a restrictor member 27 provided with an O-ring 28 for sealing purposes. At its inner end, the restrictor member 27 is tapered, as shown at 29, to cooperate with a tapered portion 31 of the plunger to form an adjustable restriction which leads into a bore 32 and cross bore 33. This restriction is defined between two metal surfaces. A further cross bore 34 communicates with the hollow interior of the plungers and leads to an annular groove 35 communicating with a cross bore 36 in the carrier 11 and to a further annular groove formed between the carrier 11 and the valve chamber 2. This last mentioned annular groove communicates with the outlet duct 4.

The outer end of the restrictor member 27 carries a transverse slot 38 to engage a screw driver or similar tool for adjustment of the restrictor. It will be seen that access can only be gained to the slot 38 when the top cover 25 and toggle 24 are removed, so that tampering with the restrictor member 27 is rendered difficult.

It will be seen that normally the spring 23 urges the plunger 17 to a closed position in which the valve member 19 engages against the seat 16 and water cannot flow. When the toggle is depressed or otherwise operated, the plunger 17 is moved against the action of the spring 23 and the valve opens so that water flows between the valve member 19 and seat 16 into a spring chamber 23a. From chamber 23a water flows through the cross bore 33 and bore 32, past the restrictor and into the cross bore 34 and the annular chamber 35, and then through the cross bore 36 and a further annular chamber 37 and into the outlet duct 4 and the nozzle 5. These chambers 35 and 37 and the various drilling allow the valve to be operated without any initial surge in the flow of water.

In accordance with the invention, it is to be noted that when it is desired to change to elastomeric material member 19, it is not necessary to remove the whole valve from the external plumbing. All that needs to be done is to remove the top cover 25, toggle 24 and spring 26a, and then to remove the lock ring 12, which is shown as being castellated as indicated at 12a for engagement by a suitable tool. By pulling on the plunger at this stage, the plunger and seat carrier 11 can be removed together and access can easily be had to the member 19 and the seat 16. Assembly is in the reverse order, with the castellated lock ring 12 being used to push the carrier right home and lock it in position.

## Claims

1. A valve comprising a valve body (1) having an inlet connection (3) and an outlet (4) leading to and from a valve chamber (2) in the body respectively, a valve seat (16) in the valve chamber and facing towards the inlet, a plunger (17) carrying a valve closure member (19) of resilient material cooperable with the valve seat (16) and restrictor means (29, 31) for flow adjustment, the valve seat (16) being carried by a valve seat support (11) and removably and sealingly received and secured in the valve chamber (2), the said plunger (17) being slidably and sealingly mounted in the valve seat support (11), characterised in that the valve seat support (11) is slid into the valve chamber (2) and secured in a predetermined position therein, and in that a restrictor member (27) is adjustably mounted inside the plunger (17) so as to define therewith a restricted flow passage (29, 31) forming part of the flow path between the valve seat (16) and the outlet (4).

2. A valve according to claim 1, characterised in that the restrictor member (27) has adjustment means (38) on an end thereof remote from the restricted flow passage (29, 31) so as to be accessible for adjustment of the restricted flow passage (29, 31) without removal of the plunger (17) or valve seat support (11) from the valve chamber (2).

3. A valve according to claim 1 or 2, characterised by comprising spring means (23) loading the plunger (17) to the closed position of the valve.

4. A valve according to claim 1, 2 or 3 characterised in that a lock ring (12) is provided to secure the valve seat support (11) in its predetermined position in the valve chamber (2).

5. A valve according to any of claims 1 to 4, in which the outlet (4) includes a drinking fountain nozzle (5).

## Revendications

1. Soupape comprenant un corps de soupape (1) muni d'un raccord d'entrée (3) et d'une sortie (4) reliés respectivement à une chambre de soupape (2) dans le dit corps, un siège de soupape (16) prévu dans cette chambre de soupape et orienté vers l'entrée (3), un plongeur (17) portant un obturateur de soupape (19) en matériau élastique pouvant coopérer avec le siège de soupape (16), et un moyen d'étranglement (29, 31) pour permettre le réglage de l'écoulement du fluide, le siège de soupape (16) étant porté par un support (11) logé de façon amovible, hermétique et fixe dans la dite chambre de soupape (2), ce plongeur (17) pouvant coulisser hermétiquement dans le support de siège de soupape (11), caractérisée par le fait que le support de siège de soupape (11) est engagé par glissement dans la chambre de soupape (2) dans laquelle il est fixé dans une position prédéterminée, et qu'un organe d'étranglement (27) est monté de façon réglable à l'intérieur du plongeur (17) afin de former avec ce dernier un passage (29, 31) à écoulement étrangle qui fait partie du trajet d'écoulement entre le siège de soupape (16) et la sortie (4).

2. Soupape suivant la revendication 1, caractérisée en ce que le dit organe d'étranglement (17) comporte des moyens de réglage (38) sur une extrémité opposée de cet organe qui est opposée au dit passage à écoulement étranglé (29, 31) de manière qu'il soit accessible aux fins de réglage du dit passage (29, 31) sand qu'il soit nécessaire de démonter le plongeur (17) ou le support de siège de soupape (11) par rapport à la chambre de soupape (2).

3. Soupape selon l'une ou l'autre des revendications 1 ou 2, caractérisée en ce qu'elle comprend un ressort (23) qui sollicite le plongeur (17) vers la position de fermeture de la soupape.

4. Soupape selon l'une quelconque des revendications 1, 2 ou 3, caractérisée en ce qu'il est prévu une bague de blocage (12) pour fixer le support de siège de soupape (11) dans sa position prédéterminée à l'intérieur de la chambre de soupape (2).

5. Soupape selon l'une quelconque des revendications 1 à 4, caractérisée en ce que la dite sortie (4) comporte un bec de borne-fontaine (5).

**Patentansprüche**

1. Ventil mit einen Ventilkörper (1) mit einem Einlaßstutzen (3) und einem Auslaß (4), die beide mit einer Ventilkammer (2) kommunizieren, einem Ventilsitz (16) in der Ventilkammer, der zum Einlaß hin orientiert ist, einem Stößel (17), der einen Verschlußkörper (19) aus elastichen Material trägt, der mit dem Ventilsitz (16) zusammenwirkt und einer Drossel (29, 31) zur Einstellung des Durchflusses, wobei der Ventilsitz (16) von einem Ventilsitzträger (11) getragen ist, der in der Ventilkammer (2) entfernbar und abgedichtet aufgenommen und befestigt ist und der Stößel (17) im Ventilsitzträger (11) gleitbar und dicht montiert ist, dadurch gekennzeichnet, daß der Ventilsitzträger (11) in die Ventilkammer (2) eingeschoben und in dieser in einer vorbestimmten Lage befestigt ist un daß innerhalb des Stößels (17) ein Drosselglied (27) verstellbar montiert ist, so daß es mit dem Stößel (17) eine Drosselstelle (29, 31) bildet, die einen Teil des Fließweges zwischen dem Ventilsitz (16) und dem Auslaß (4) bildet.

2. Ventil nach Anspruch 1, dadurch gekennzeichnet, daß das Drosselglied (27) Einstellmittel (28) aufweist, die sich an einem von der Drosselstelle (29, 31) entfernten Ende des Drosselgliedes (27) befindet, so daß die Einstellmittel (38) zur Einstellung der Drosselstelle (29, 31) zugänglich sind ohne Entfernung des Strößels (17) oder des Ventilsitzträgers (11) aus der Ventilkammer (2).

3. Ventil nach Anspruch 1 oder 2, gekennzeichnet durch federnde Mittel (23), die den Stößel (17) in die Schließstellung des Ventils drücken.

4. Ventil nach Anspruch 1, 2 oder 3, dadurch gekennzeichnet, daß ein Haltering (2) vorgesehen ist, mit dem der Ventilsitzträger (22) in seiner vorbestimmten Lage in der Ventilkammer (2) arretiert ist.

5. Ventil nach einem der Ansprüche 1 bis 4, dadurch gekennzeichnet, daß der Auslaß (4) eine Trinkbrunnen-Düse (5) aufweist.